# EUROPEAN PATENT APPLICATION

(11) **EP 2 495 153 A1**
(43) Date of publication of application: **05.09.2012**
(21) Application number: 12154061.1
(22) Date of filing: 06.02.2012
(51) Int. Cl.: B62B 9/12, B62B 9/26

(54) **Stroller**

(30) Priority: 03.03.2011 JP 2011046295
(71) Applicant: Aprica Children's Products Inc., Chuo-ku, Osaka-shi Osaka 542-0082 (JP)
(72) Inventor: Ohnishi, Ichiro, Osaka-shi, Osaka 542-0082 (JP)
(74) Representative: Prüfer & Partner GbR European Patent Attorneys

(57) **Abstract**

A stroller (11) includes: a seat frame (13) having a seat portion (12) attached thereto; front-leg frames (141) extending downward from the seat frame (13) toward the front, and having front wheels (171) attached to their lower ends, respectively; rear-leg frames (151) extending downward from the seat frame (13) toward the rear, and having rear wheels (181) attached to their lower ends, respectively; and a storage portion (31) provided in a space below the seat portion (12). The storage portion (31) includes a bottom wall (32), and a peripheral wall standing upward from a peripheral edge of the bottom wall (32). A rear wall portion (33), which forms a part on a side of a rear end in the peripheral wall, is capable of being shifted between a standing position and an open position where the rear wall portion is tilted so as to protrude rearward from the rear end of the bottom wall (32) in a substantially horizontal direction.

## Description

### Technical Field

The present invention relates to strollers that are used to carry an infant or small child, and more particularly to strollers having a storage portion for storing items.

### Background Art

In strollers that are used to carry an infant or small child, strollers capable of carrying items together with an infant or small child in order to improve users' convenience are known in the art. Such a stroller typically includes a basket-shaped storage portion, which is capable of storing items, in a space below a seat portion on which an infant or small child is to be seated. This storage portion allows the user to carry items together with the infant or small child. However, the user often has many things to carry during shopping, such as user's belongings like purchased items and a handbag, and a shopping basket for use in the store. This is inconvenient because the user needs to push the stroller while holding items that do not fit in the storage portion, such as the shopping basket. As a solution to this problem, strollers described in, e.g., Japanese Unexamined Patent Application Publication Nos. 2005-112214 and 2005-225474 are known as strollers that further improve the users' convenience during shopping.

### Citation List

### Patent Literature

Patent Literature 1: Japanese Unexamined Patent Application Publication No. 2005-112214
Patent Literature 2: Japanese Unexamined Patent Application Publication No. 2005-225474

### Summary of Invention

The stroller described in Japanese Unexamined Patent Application Publication No. 2005-112214 includes "fastening members" that is detachably attached to a handle frame located at an upper position and a rear-leg frame located at a lower position in order to hang an item. With this configuration, an item such as a shopping basket can be hung on the fastening member and carried, whereby users' convenience during shopping can be improved.

The stroller described in Japanese Unexamined Patent Application Publication No. 2005-225474 includes a "cart" coupled to a rear-leg frame and capable of being moved together with the stroller. An item such as a shopping basket can be carried by this cart.

However, the stroller described in Japanese Unexamined Patent Application Publication No. 2005-112214 may fall over backward due to the weight of the item if the item is hung on the fastening member attached to the handle frame. Moreover, this stroller is disadvantage in terms of the convenience because the user may need to attach or detach the fastening member to or from the leg frame or the handle according to the situation where the stroller is used, or may need to carry or store the detached fastening member.

In the stroller described in Japanese Unexamined Patent Application Publication No. 2005-225474, the user need to couple a very large member, namely the "cart," to the stroller upon every time he/she uses the cart. This configuration is highly disadvantageous in terms of convenience for actual use, because the user needs to carry the cart all the time, and needs to attach and detach the cart to and from the stroller every time he/she uses the cart.

In view of the above problems, it is an object of the present invention to provide a stroller capable of significantly increasing users' convenience during shopping with a stroller, etc.

A stroller according to the present invention includes: a seat frame having attached thereto a seat portion on which an infant or small child is to be seated; a pair of left and right front-leg frames extending downward from the seat frame toward front, and having front wheels attached to their lower ends, respectively; a pair of left and right rear-leg frames extending downward from the seat frame toward rear, and having rear wheels attached to their lower ends, respectively; and a basket-shaped storage portion provided in a space below the seat portion, and capable of storing an item therein. The storage portion includes a bottom wall configured to support the stored item from below, and a peripheral wall standing upward from a peripheral edge of the bottom wall. A rear wall portion, which forms a part on a side of a rear end in the peripheral wall, is capable of being shifted between a standing position and an open position where the rear wall portion is tilted so as to protrude rearward from the rear end of the bottom wall in a substantially horizontal direction.

With the above configuration, the rear wall portion as a part of the storage portion can be used as a base on which an item such as a shopping basket for use in a store during shopping is to be placed. Thus, the user does not have to hold the shopping basket with the other hand while pushing the stroller with one hand, and can comfortably do his/her shopping with the stroller. In the present invention, since the rear wall portion is used as a base on which an item is to be placed, the user need not separately carry a member that forms the base. Moreover, in the case where the rear wall portion is used as a base, the user need only move the rear wall portion to the open position. Thus, the user need only perform this simple operation to form the base that supports the shopping basket 40. Thus, according to the present invention, convenience during shopping with the stroller can be significantly improved.

Preferably, the stroller further includes a first latch member configured to maintain the rear wall portion in the open position when the rear wall portion is located at the open position. With this configuration, since the rear wall portion can be stably maintained in the open position, the stored item can be stably supported in the case where the rear wall portion is used as a base on which an item is to be placed. Moreover, the rear wall portion latched at the open position can prevent the stroller from falling over backward even if a relatively heavy item is placed on the rear wall portion or an infant or small child is placed on the rear wall portion.

Preferably, the rear wall portion further includes a wheel that contacts a ground when the rear wall portion is located at the open position. With this configuration, the position of the rear wall potion can be more stably maintained by the wheel contacting the ground, in the case where the rear wall portion is used as a base on which an item is to be placed. Thus, even if a heavy item is placed in the shopping basket or a child plays on the rear wall portion, the shopping basket or the child can be more stably supported, and the stroller can be reliably prevented from falling over backward by the weight of the stored item etc.

Preferably, the rear wall portion has its lower end pivotally coupled to the rear-leg frames, and is pivotable to move between the standing position and the open position. With this configuration, the user can more easily perform the operation of opening the rear wall portion to use it as a base on which an item is to be placed, and the operation of lifting the rear wall portion to the standing position to form a normal storage portion. This can further improve convenience as a stroller.

Preferably, the stroller further includes a second latch member configured to maintain the rear wall portion in the standing position. With this configuration, the rear wall portion can be stably maintained in the standing state, and thus the shape of the storage portion can be firmly retained.

Preferably, the rear wall portion is comprised of a highly rigid material. This configuration can further improve stability in supporting the stored item when the rear wall portion is used as a base on which an item is to be placed.

Preferably, the stroller further includes a third latch member configured to restrict movement of a shopping basket in longitudinal and lateral directions when the rear wall portion is located at the open position and the shopping basket is placed on the rear wall portion.

More preferably, the third latch member includes a latch portion main body attached to the rear-leg frame and extending rearward from the rear-leg frame, and a pawl portion extending downward from a rear end of the latch portion main body. With this configuration, an item such as a shopping basket can be stably placed on the rear wall portion by a member having a very simple structure.

According to the present invention, the rear wall portion as a part of the storage portion can be used as a base on which an item such as a shopping basket for use in a store during shopping is to be placed. Thus, the user does not have to hold the shopping basket with the other hand while pushing the stroller with one hand, and can comfortably do his/her shopping with the stroller. Moreover, in the present invention, since the rear wall portion is used as a base on which an item is to be placed, the user need not separately carry a member that forms the base. Furthermore, in the case where the rear wall portion is used as a base, the user need only move the rear wall portion to the open position. Namely, the user need only perform this simple operation to form the base on which an item is to be placed. Thus, according to the present invention, convenience during shopping with the stroller can be significantly improved.

### Brief Description of Drawings

Fig. 1 is a left side view of a stroller according to an embodiment of the present invention.
Fig. 2 is a rear view of the stroller shown in Fig. 1.
Fig. 3 is a perspective view of the stroller shown in Fig. 1, as viewed from the right rear side.
Fig. 4 is a left side view of the stroller shown in Fig. 1, with a rear wall portion of a storage portion being located at an open position.
Fig. 5 is an enlarged view of the stroller in the state of Fig. 4, with a shopping basket being placed on the rear wall portion located at the open position.
Fig. 6 is an overall perspective view of the stroller in the state of Fig. 4, as viewed from the left front side, with the shopping basket being placed on the rear wall portion located at the open position.
Fig. 7 is a left side view of the stroller shown in Fig. 4, with handle portions being pivoted rearward by 180°.
Fig. 8 is a left side view of the stroller shown in Fig. 4, with front wheels of the stroller being lifted to a height "h" from the road surface.

### Description of Embodiments

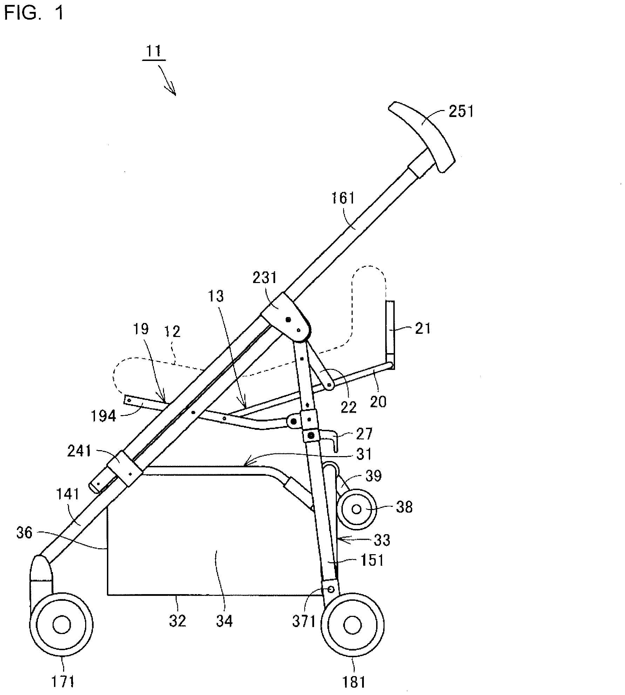

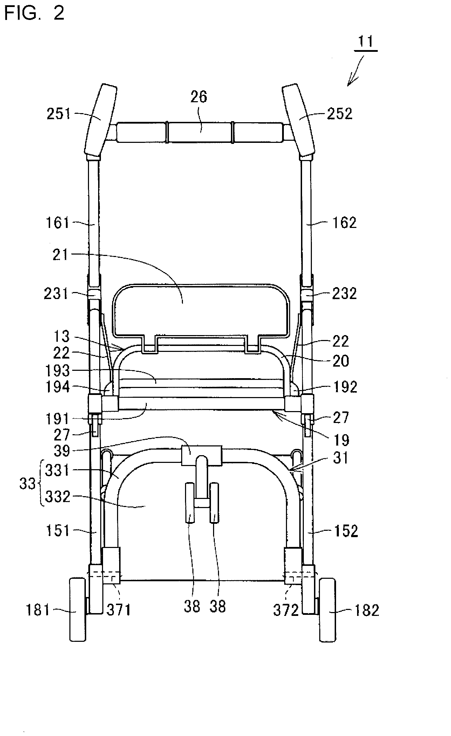

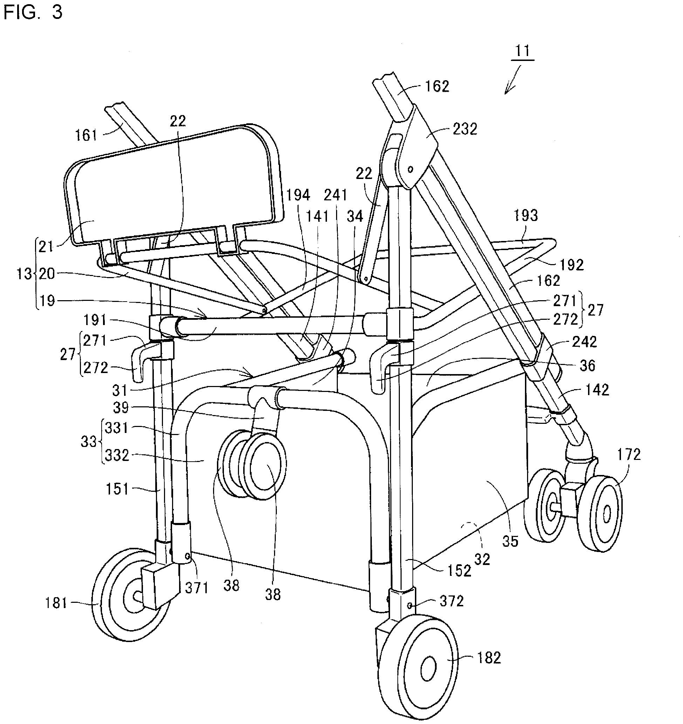

An embodiment of the present invention will be described in detail below with reference to the accompanying drawings. First, the configuration of a stroller 11 according to an embodiment of the present invention will be described with reference to Figs. 1 to 3. As used herein, the "longitudinal and lateral directions" are defined based on the direction of gaze of an infant or small child (not shown) who is seated on the stroller 11. That is, as used herein, the "longitudinal direction" corresponds to the lateral direction in the plane of the paper of Fig. 1, and the "lateral direction" corresponds to the direction perpendicular to the plane of the paper of Fig. 1. In order to facilitate understanding, a seat portion 12 included in the stroller 11 is shown by a dotted line in Fig. 1, and is not shown in Figs. 2 and 3.

The stroller 11 according to the embodiment of the present invention includes a seat frame 13, a pair of left and right front-leg frames 141, 142 extending downward from the seat frame 13 toward the front, a pair of left and right rear-leg frames 151, 152 extending downward from the seat frame 13 toward the rear, and a pair of left and right hand-push frames 161, 162 respectively attached to the left and right front-leg frames 141, 142. The seat portion 12 on which an infant or small child is to be seated is attached to the seat frame 13.

Each of the left and right front-leg frames 141, 142 extends obliquely downward toward the front from its upper end to its lower end. A pair of left and right front wheels 171, 172 are respectively attached to the lower ends of the front-leg frames 141, 142. The front wheels 171, 172 are attached to the front-leg frames 141, 142 so as to be pivotable with respect to the vertical direction.

Each of the left and right rear-leg frames 151, 152 extends obliquely downward toward the rear from its upper end to its lower end. A pair of left and right rear wheels 181, 182 are respectively attached to the lower ends of the rear-leg frames 151, 152. More specifically, the upper end of the left rear-leg frame 151 is coupled to the upper end of the left front-leg frame 141 via a coupling member 231, and the upper end of the right rear-leg frame 152 is coupled to the upper end of the right front-leg frame 142 via a coupling member 232.

The seat frame 13 has a sitting-portion frame 19 that is coupled to the left and right front-leg frames 141, 142 and the left and right rear-leg frames 151, 152, a back frame 20 that is coupled to the sitting-portion frame 19, and a head frame 21 that is coupled to the back frame 20.

The sitting-portion frame 19 is a pipe-shaped member extending so as to form a rectangular shape. The sitting-portion frame 19 is formed by a rear frame portion 191 extending from the left rear-leg frame 151 to the right rear-leg frame 152, a right frame portion 192 extending forward from the right end of the rear frame portion 191, a front frame portion 193 extending leftward from the front end of the right frame portion 192, and a left frame portion 194 extending rearward from the left end of the front frame portion 193 and coupled to the left end of the rear frame portion 191.

The back frame 20 is a pipe-shaped member continuously extending upward toward the rear so as to form a substantially U-shape. The left end of the back frame 20 is coupled to the left frame portion 194, and the right end of the back frame 20 is coupled to the right frame portion 192. The back frame 20 is coupled to the coupling members 231, 232 via coupling frames 22 so that the position of the back frame 20 can be stably maintained. The head frame 21 is coupled to the upper end of the back frame 20.

The seat portion 12 having a cushioning property is placed on the seat frame 13 that is formed by the sitting-portion frame 19, the back frame 20, and the head frame 21, and the infant or small child is seated on the seat portion 12.

The hand-push frames 161, 162 are respectively coupled to the front-leg frames 141, 142 via coupling members. More specifically, the left hand-push frame 161 has its lower end coupled to the front-leg frame 141 via a coupling member 241. The coupling member 241 is a member having a sleeve shape capable of holding both the hand-push frame 161 and the front leg frame 141 therein, and is fixed to the front-leg frame 141. The hand-push frame 161 has its intermediate portion inserted and fixed in a hollow sleeve portion provided in the coupling member 231. The hand-push frame 161 is thus coupled to the front-leg frame 141 via the coupling members 231, 241.

Similarly, the right hand-push frame 162 has its lower end coupled to the front-leg frame 142 via a coupling member 242 having a shape similar to the coupling member 241. The hand-push frame 162 has its intermediate portion inserted and fixed in a hollow sleeve portion provided in the coupling member 232. The hand-push frame 162 is thus coupled to the front-leg frame 142 via the coupling members 232, 242.

A pair of left and right handle portions 251, 252 are respectively attached to the upper ends of the hand-push frames 161, 162. Each of the handle portions 251, 252 of the present embodiment is a bar-shaped member that protrudes in one direction from the upper end of a corresponding one of the hand-push frames 161, 162 by a predetermined length. The handle portions 251, 252 are attached so as to be pivotable about the axes of the hand-push frames 161, 162, respectively. This configuration will be described later. The upper end of the left hand-push frame 161 is coupled to the upper end of the right hand-push frame 162 by a handle frame 26 extending in the lateral direction. The left and right handle portions 251, 252 and the handle frame 26 are members for the user to hold when pushing the stroller 11.

The stroller 11 according to the present embodiment includes, in a space below the seat portion 12, a basket-shaped storage portion 31 capable of storing various items therein. The storage portion 31 has a quadrilateral bottom wall 32 configured to support the stored item or items from below, a rear wall portion 33 standing upward from the rear edge of the bottom wall 32, a left wall portion 34 standing upward from the left edge of the bottom wall 32, a right wall portion 35 standing upward from the right edge of the bottom wall 32, and a front wall portion 36 standing upward from the front edge of the bottom wall 32. That is, in the storage portion 31 of the present embodiment, a quadrilateral storage cross sectional space is formed by the bottom wall 32, the rear wall portion 33, the left wall portion 34, the right wall portion 35, and the front wall portion 36.

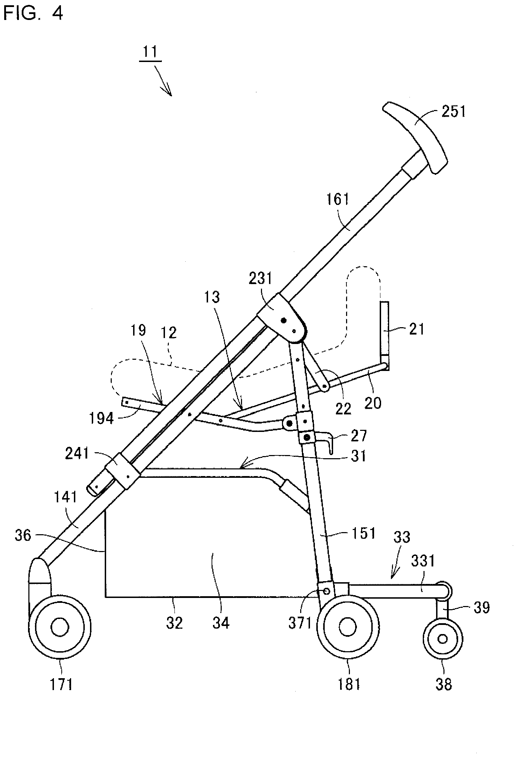

In the storage portion 31 of the present embodiment, the rear wall portion 33, which forms one side of the quadrilateral shape, can be shifted between a standing position where the rear wall portion 33 stands upward from the rear edge of the bottom wall 32 as shown in Figs. 1 to 3 and an open position where the rear wall portion 33 is tilted so as to protrude rearward from the rear end of the bottom wall 32 in a substantially horizontal direction as shown in Fig. 4.

Specifically, the rear wall portion 33 includes a rear-wall frame 331 continuously extending in a U-shape, and a rear-wall plate 332 attached to the rear-wall frame 331. The left lower end of the rear-wall frame 331 is pivotally coupled to the lower end of the rear-leg frame 151 via a coupling shaft 371, and the right lower end of the rear-wall frame 331 is pivotally coupled to the lower end of the rear-leg frame 152 via a coupling shaft 372. The rear-wall plate 332 is a flat plate-like member comprised of a highly rigid material. In the present embodiment, an auxiliary wheel 38 is pivotally attached to a central portion of the rear-wall frame 331 via a coupling member 39.

The stroller 11 according to the present embodiment further includes a first latch member configured to maintain the rear wall portion 33 in the open position when the rear wall portion 33 is located at the open position shown in Fig. 4, a second latch member configured to maintain the rear wall portion 33 in the standing position shown in Fig. 1, and an auxiliary-wheel latch member configured to restrict pivoting of the auxiliary wheel 38 when the rear wall portion 33 is located at the open position in Fig. 4 (these latch members are not shown). The first latch member, the second latch member, and the auxiliary-wheel latch member can firmly maintain the state shown in Fig. 1 and the state shown in Fig. 4. The first latch member or the second latch member may have any configuration as long as it is capable of restricting pivoting of the rear wall portion 33. For example, the first latch member or the second latch member may be formed by a through hole provided in the rear-wall frame 331 and a latch pin provided in the rear-leg frame 151, 152, so that the first latch member or the second latch member restricts pivoting of the rear wall portion 33 by inserting the latch pin in the through hole at the standing position or the open position.

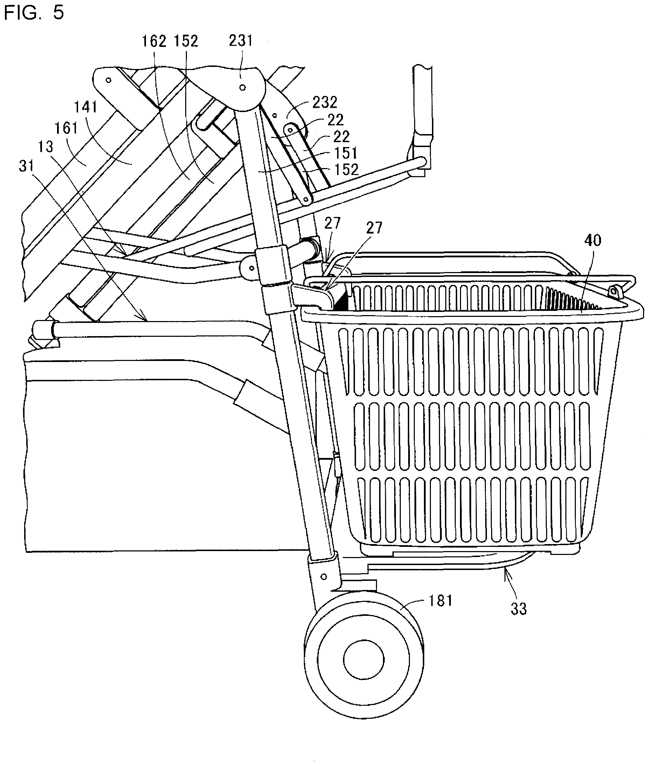

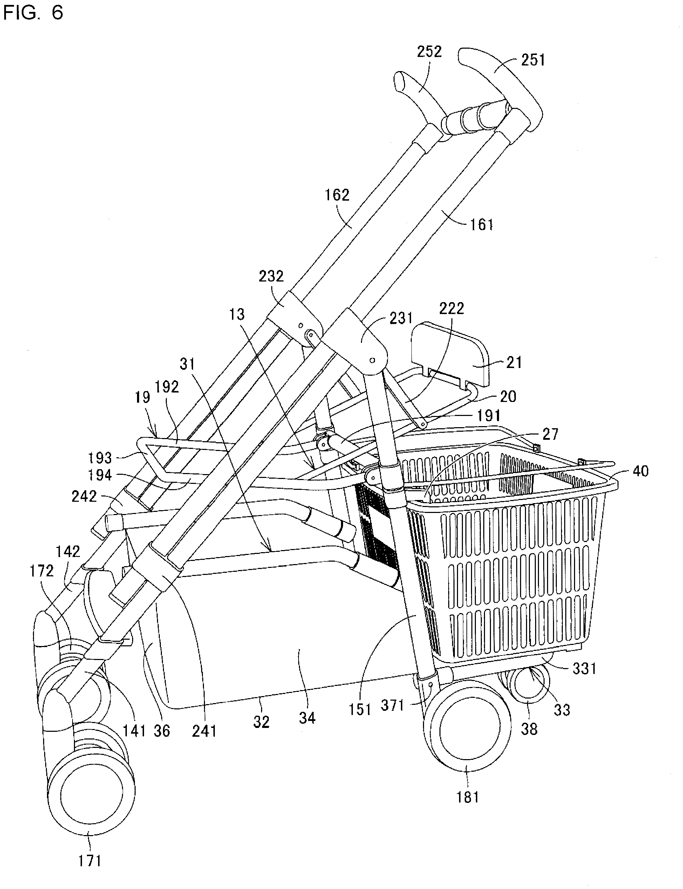

The rear wall portion 33 of the present embodiment having the above configuration can be pivoted rearward from the standing position shown in Figs. 1 to 3 to the open position shown in Fig. 4 about the coupling shafts 371, 372, and can be locked at the standing position or the open position. This allows the rear wall portion 33 to be used as a base on which an item such as a shopping basket for use in a store during shopping is to be placed. Figs. 5 and 6 show the stroller 11 with a shopping basket 40 being placed on the rear wall portion 33 located at the open position. In the case of using the rear wall portion 33 as a base on which the shopping basket 40 is to be placed, the rear wall portion 33 is moved to the open position, and is locked by the first latch member.

The stroller 11 according to the present embodiment further includes third latch members 27 configured to restrict movement of the shopping basket 40 in the rearward and lateral directions when the shopping basket 40 is placed on the rear wall portion 33. The third latch members 27 are respectively attached to the left and right rear-leg frames 151, 152. Each of the third latch members 27 includes a latch portion main body 271 extending rearward from a corresponding one of the rear-leg frames 151, 152, and a pawl portion 272 extending downward from the rear end of the latch portion main body 271. When the shopping basket 40 is placed on the rear wall portion 33, the pawl portions 272 get into the shopping basket 40 and latch the shopping basket 40. Thus, movement of the shopping basket 40 in the rearward and lateral direction is restricted. Since the front face of the shopping basket 40 is in contact with the left and right rear-leg frames 151, 152, movement of the shopping basket 40 in the forward direction is also restricted. That is, according to the present embodiment, the shopping basket 40 can be prevented from moving in the longitudinal and lateral directions when the stroller 40 is used in the state shown in Figs. 5 and 6.

Figs. 5 and 6 show the state in which the shopping basket 40 is placed "transversely" on the rear wall portion 33 so that the longitudinal direction of the shopping basket 40 extends in the lateral direction, and the shopping basket 40 is latched by the third latch members 27. If the shopping basket 40 is placed "longitudinally" on the rear wall portion 33, the shopping basket 40 can be slid forward into the storage portion 31. This allows the user to more easily store a relatively large item such as the shopping basket 40 in the storage portion 31.

As described above, in the stroller 11 of the present embodiment, the rear wall portion 33 as a constituent member of the storage portion 31 can be used as a base on which the shopping basket 40 is to be placed. Thus, the user does not have to hold the shopping basket 40 with the other hand while pushing the stroller 11 with one hand, and can comfortably do his/her shopping with the stroller 11. As described above, since the rear wall portion 33 as a constituent member of the storage portion 31 is used as a base on which the shopping basket 40 is to be placed, the user need not separately carry a member that forms the base on which the shopping basket is to be placed. Moreover, in the case where the rear wall portion 33 is used as a base, the user need only release or unlock the second latch member from the state shown in Fig. 1, pivot the rear wall portion 33 to the open position, and lock the rear wall portion 33 by the first latch member. That is, the user need only perform this simple operation to form the base that supports the shopping basket 40. Thus, according to the present invention, convenience during shopping with the stroller 11 can be significantly improved.

According to the present embodiment, the rear wall portion 33 is locked at the open position by the first latch member when the rear wall portion 33 is moved to the open position as shown in Fig. 4. Moreover, in this state, the auxiliary wheel 38 attached to the rear wall portion 33 contacts the ground, and is locked in that position by the auxiliary-wheel latch member. This configuration prevents the stroller 11 from falling over backward even if a relatively heavy item, such as the shopping basket 40 containing many items, is placed on the rear wall portion 33 or if the infant or small child is placed on the rear wall portion 33. Thus, the relatively heavy item or the infant or small child can be stably supported. The rear wall portion 33 locked at the open position also prevents the stroller 11 from falling over backward even if, e.g., the user hangs a heavy item with on the handle portion 251, 252 or the handle frame 26 of the stroller 111 to carry the item.

According to the present embodiment, the rear-wall plate 332 forming the rear wall portion 33 is comprised of a highly rigid material. This configuration can further improve stability in supporting an item that is placed on the rear wall plate 33 when the rear wall portion 33 is used as a base on which an item is to be placed.

According to the present embodiment, the pair of left and right handle portions 251, 252 are respectively attached to the upper ends of the hand-push frames 161, 162 so as to be pivotable about the axes of the hand-push frames 161, 162. This can improve convenience for walking of the user when the user uses the stroller 11 with the rear wall portion 33 being opened. This will be described with reference to Figs. 1, 4, and 7.

In a normal state, the rear wall portion 33 is located at the standing position, as shown in Fig. 1. In this state, the handle portions 251, 252 are located behind the left and right rear wheels 181, 182 in the longitudinal direction. Thus, even if the user pushes the stroller 11 and walks while holding the handle portions 251, 252 in the state shown in Fig. 1, the rear wheels 181, 182 do not interfere with the toes of the user's feet, and the user can comfortably push the stroller 11.

On the other hand, when the rear wall portion 33 is opened as shown in Fig. 4, the rear wall portion 33 and the auxiliary wheel 38 are located behind the rear wheels 181, 182. That is, the handle portions 251, 252 are located ahead of these members in the longitudinal direction. If the user pushes the stroller 11 and walks in this state, the rear wall portion 33 or the auxiliary wheel 38 interferes with the toes of the user's feet, thereby interfering with the user's walking.

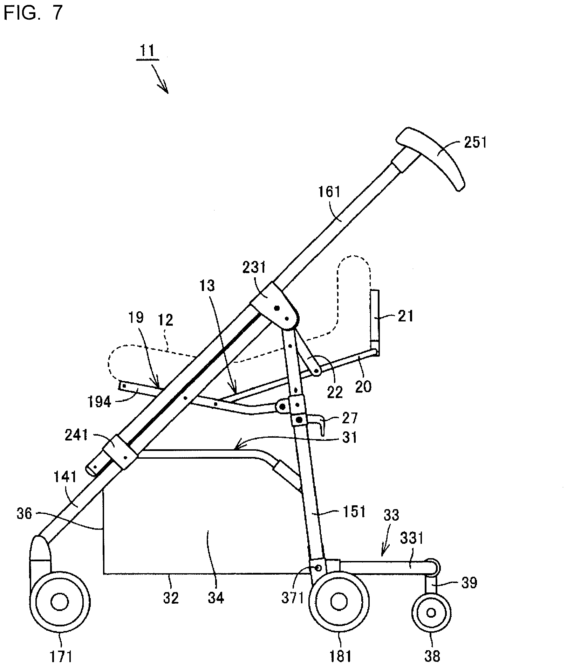

With the above configuration, the handle portions 251, 252 of the present embodiment can be easily moved from the state of Fig. 4 to the state of Fig. 7. In the state of Fig. 7, the handle portions 251, 252 protrude rearward from the upper ends of the hand-push frames 161, 162 by a predetermined length. That is, the handle portions 251, 252 are located at about the same position as or behind the rear wall portion 33 and the auxiliary wheel 38 in the longitudinal direction. Thus, even if the user pushes the stroller 11 and walks while holding the handle portions 251, 252 in this state, the interference between the toes of the user's feet and the rear wall portion 33 or the auxiliary wheel 38 can be prevented, and the user can comfortably push the stroller 11.

As described above, the handle portions 251, 252 of the present embodiment can be switched between the position where the handle portions 251, 252 protrude forward with respect to the hand-push frames 161, 162 and the position where the handle portions 251, 252 protrude rearward with respect to the hand-push frames 161, 162. Thus, in a stroller configured to hold an item etc. in a portion located behind the wheels 181, 182, like the stroller 11 of the present embodiment, interference with the user's walking can be easily prevented by switching the positions of the handle portions 251, 252.

Although the present embodiment is described with respect to an example in which the longitudinal positions of the handle portions 251, 252 can be switched by pivoting the handle portions 251, 252, the present invention is not limited to this, and the handle portions may be, e.g., detachable or slidable handle portions. That is, the handle portions may have any configuration as long as the handle portions "can be switched between the position where the handle portions protrude forward with respect to the hand-push frames and the position where the handle portions protrude rearward with respect to the hand-push frames."

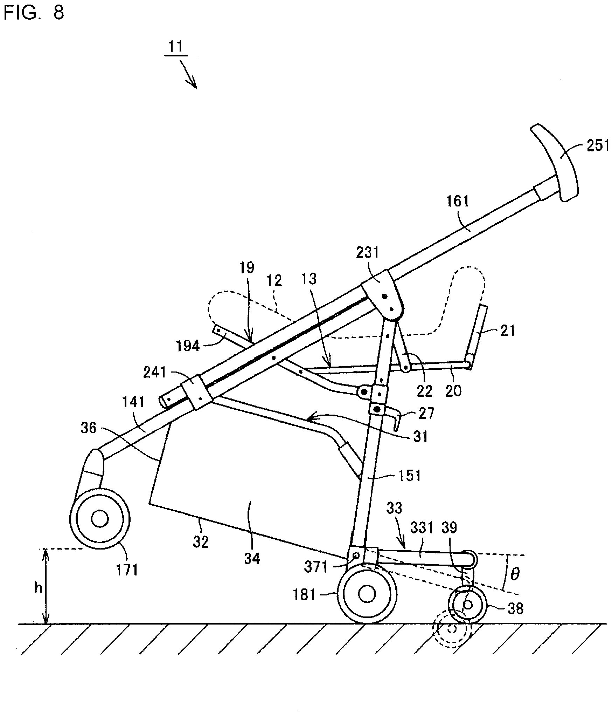

Preferably, the first latch member is configured to maintain the rear wall portion 33 in the open position with a predetermined "play." This will be described with reference to Fig. 8. When actually using the stroller 11 outdoor, the user often encounters barriers to movement of the user, such as stairs. In this case, as shown in Fig. 8, the user needs to lift the front wheels 171, 172 of the stroller 11 from the road surface to get over the barriers. That is, the first latch member need be configured to allow the rear wall portion 33 to pivot by an angle "θ" so that the front wheels 171, 172 can be lifted to a height "h" from the road surface. In addition, as described above, the first latch member has a function to lock the rear wall portion 33 to prevent the stroller 11 from falling over backward. Accordingly, the first latch member need be configured to reliably prevent the rear wall portion33 from pivoting by an angle larger than the predetermined angle "θ." Thus, it is preferable that the first latch member be configured to maintain the rear wall portion 33 in the open position with a play of the angle "θ." This can reliably prevent the stroller 11 from falling over backward, and can improve convenience for actual use of the stroller 11.

The present embodiment is described with respect to an example in which the storage portion 31 is formed by the quadrilateral bottom wall 32, the front, rear, right, and left wall portions 33, 34, 35, 36 standing from the four sides of the bottom wall 32 so as to define the quadrilateral shape, and the rear wall portion 33 forming one side of the quadrilateral shape is used as a base on which an item is to be placed. However, the present invention is not limited to this, and the shape of the bottom wall, or the shape defined by a peripheral wall standing from the peripheral edge of the bottom wall may be, e.g., a circle, a polygon such as a triangle or a hexagon, or any other shape. That is, the concept of the present invention resides in the use of a part of the constituent member of the storage portion as a base on which an item is to be placed, and is not limited to the shape of the storage portion.

The present embodiment is described with respect to an example in which the rear wall portion 33 is formed by the rear-wall frame 331 and the rear-wall plate 332. However, the present invention is not limited to this, and the rear wall portion 33 may be formed by a single member, or may have a plurality of members.

The present embodiment is described with respect to an example in which the rear wall portion 33 is pivotable about the coupling shafts 371, 372 to move between the standing position and the open position. However, the present invention is not limited to this. For example, the rear wall portion 33 may be configured to be detachably attached at the standing position or the open position. Alternatively, a part of the constituent member of the storage portion may be slid to protrude in one direction, and the protruding part may be used as a base on which an item is to be placed.

The present embodiment is described with respect to an example in which the auxiliary wheel 38 is provided which contacts the ground when the rear wall portion 33 is located at the open position. However, the present invention is not limited to this. The auxiliary wheel 38 need not necessarily provided, and any member may be used which contacts the ground when the rear wall portion 33 is located at the open position.

The present embodiment is described with respect to an example in which the auxiliary wheel 38 is pivotally attached to the rear wall portion 33. However, the present invention is not limited to this, and the auxiliary wheel 38 may be fixed to the rear wall portion 33, or may be provided integrally with the rear wall portion 33. Alternatively, the auxiliary wheel 38 may be configured to be detachably attached to the rear wall portion 33.

The present embodiment is described with respect to an example in which the third latch members 27, which are configured to restrict movement of the shopping basket 40 when the shopping basket 40 is placed on the rear wall portion 33, are provided on the rear leg frames 151, 152. However, the present invention is not limited to this. For example, the third latch members 27 may be provided on the wall surface of the rear wall portion on which the shopping basket is to be placed. The third latch members 27 may have any shape as long as they restrict movement of the shopping basket in the horizontal direction.

Although the embodiment of the present invention is described above with reference to the drawings, the present invention is not limited to the illustrated embodiment. Various modifications and variations can be made to the illustrated embodiment without departing from the sprit and scope of the present invention.

The present invention provides a stroller capable of significantly improving users' convenience during shopping, and is advantageously used in the field of manufacturing strollers.

## Claims

1. A stroller, comprising:
a seat frame (19) having attached thereto a seat portion on which an infant or small child is to be seated;
a pair of left and right front-leg frames (141, 142) extending downward from said seat frame toward front, and having front wheels attached to their lower ends, respectively;
a pair of left and right rear-leg frames (151, 152) extending downward from said seat frame toward rear, and having rear wheels attached to their lower ends, respectively; and
a basket-shaped storage portion (31) provided in a space below said seat portion, and capable of storing an item therein, wherein
said storage portion (31) includes a bottom wall (32) configured to support said stored item from below, and a peripheral wall (33, 34, 35, 36) standing upward from a peripheral edge of said bottom wall, and
a rear wall portion (33), which forms a part on a side of a rear end in said peripheral wall, is capable of being shifted between a standing position and an open position where said rear wall portion is tilted so as to protrude rearward from said rear end of said bottom wall in a substantially horizontal direction.

2. The stroller according to claim 1, further comprising:
a first latch member configured to maintain said rear wall portion in said open position when said rear wall portion is located at said open position.

3. The stroller according to claim 1 or 2, wherein
said rear wall portion further includes a wheel (38) that contacts a ground when said rear wall portion is located at said open position.

4. The stroller according to any one of claims 1 to 3, wherein
said rear wall portion has its lower end pivotally coupled to said rear-leg frames, and is pivotable to move between said standing position and said open position.

5. The stroller according to any one of claims 1 to 4, further comprising:
a second latch member configured to maintain said rear wall portion in said standing position.

6. The stroller according to any one of claims 1 to 5, wherein
said rear wall portion is comprised of a highly rigid material.

7. The stroller according to any one of claims 1 to 6, further comprising:
a third latch member (27) configured to restrict movement of a shopping basket in longitudinal and lateral directions when said rear wall portion is located at said open position and said shopping basket is placed on said rear wall portion.

8. The stroller according to claim 7, wherein
said third latch member includes
a latch portion main body (271) attached to said rear-leg frame and extending rearward from said rear-leg frame, and
a pawl portion (272) extending downward from a rear end of said latch portion main body.
